# EUROPEAN PATENT APPLICATION

(11) **EP 2 472 837 A1**
(43) Date of publication of application: **04.07.2012**
(21) Application number: 10197436.8
(22) Date of filing: 30.12.2010
(51) Int. Cl.: H04M 1/725, G06Q 10/00

(54) **Selective message rendering using communication device**

(71) Applicant: Research In Motion Limited, Waterloo, ON N2L 3W8 (CA)
(72) Inventor: Wormald, Christoper R., Waterloo Ontario N2K 0A7 (CA); Morra, Carmine, Waterloo Ontario N2K 0A7 (CA)
(74) Representative: Moore, Barry

(57) **Abstract**

A system and method is provided for selectively presenting received messages to a user via a visual or audio interface while redacting potentially sensitive information or notification of messages containing sensitive information. When a message is received, the message content is compared to predefined crieteria to determine whether it contains sensitive information. If the message contains sensitive information, its header information, which is normally presented in a message mailbox listing or in an audible notification, is redacted to remove some or all of the header content. The user may still review the entire message as received by the user's communication device without redaction.

## Description

The present invention relates generally to the management and rendering of messages on a communication or data processing device.

Electronic messages in various formats such as e-mail, SMS, MMS, instant messages (server-based or peer-to-peer), and the like may be rendered for presentation to a message recipient by a number of means, including visually on a communication device display, as well as audibly using a voice synthesizer that converts text content to speech. The presentation of messages to the recipient, however, may not be private, since the message display of a communication device may be seen by others, and an audible rendition of a message may be heard by others.

### GENERAL

The embodiments described herein generally provide a system and method for managing messages and their presentation using a number of user devices such as smartphones and similar mobile communication devices capable of communicating wirelessly, as well as other computing devices adapted to communicate over networks using fixed connections. These embodiments will be described and illustrated primarily in relation to a mobile wireless communication device, hereafter referred to as a mobile communication device or communication device. A system and method may be provided for selectively presenting received messages to a user via a visual or audio interface while redacting potentially sensitive information or notification of messages containing sensitive information. When a message is received, the message content may be compared to predefined criteria to determine whether it contains sensitive information. If the message contains sensitive information, its header information, which is normally presented in a message mailbox listing or in an audible notification, may be redacted to remove some or all of the header content. The user may still review the entire message as received by the user's communication device without redaction. It will be appreciated by those skilled in the art, however, that this description is not intended to limit the scope of the described embodiments to mobile wireless communication devices. The methods and systems described herein may be applied to any appropriate communication device or data processing device adapted to communicate with another communication or data processing device over a fixed or wireless connection, whether portable or wirelessly enabled or not, whether provided with voice communication capabilities or not, including without limitation cellular phones, smartphones, wireless organizers, personal digital assistants, desktop computers, terminals, laptops, tablets, handheld wireless communication devices, notebook computers and the like. Unless expressly stated, the communication device may include any such device.

The embodiments described herein may provide a device, which may be a wireless communication device, comprising a communications module; at least one user interface; a memory for storing messages; and at least one processor configured to: receive, by the communications module, a message having content comprising at least a header and a body, and to store said received message in the memory; determine that the received message content contains sensitive information by comparing the received message content to predefined criteria; in response to an instruction to provide a message listing or audible notification of messages upon receipt, said message listing or audible notification comprising at least a portion of a header of said messages, present the received message at the device via one of the at least one user interface while redacting the header for said received message; and in response to a received command, present said received message content including said sensitive information via said user interface. In a further aspect, the processor may be further configured to associate the received message with a sensitivity flag; and prior to said presenting said received message content, display said received message as a priority message in a message listing at one of the at least one user interface.

There may also be provided a method, comprising: receiving, at a device, a message having content comprising at least a header and a body; determining that the received message content contains sensitive information by comparing the received message content to predefined criteria; in response to an instruction to provide a message listing or audible notification of messages upon receipt, said message listing or audible notification comprising at least a portion of a header of said messages, presenting the received message at the device via a user interface while redacting the header for said received message; and in response to a received command, presenting said received message content including said sensitive information via the user interface. In one aspect, the method may also comprise associating the received message with a sensitivity flag; and prior to said presenting said received message content, displaying said received message as a priority message in a message listing. In a further aspect, the device may be a message server in communication with a mobile communication device, said determining is carried out at the message server, and presenting the received message via the user interface comprises transmitting the message listing comprising said redacted header to the mobile communication device for display. In still a further aspect, the device may be a wireless communication device in communication with an audio accessory, said determining is carried out at the wireless communication device, and said presenting the received message is carried out via the audio accessory. In yet a further aspect, the device may be a wireless communication device, and said determining, said presenting the received message, and said presenting the received message content are carried out at the wireless communication device.

In an aspect of these embodiments, said user interface may be a display, and presenting the received message via the user interface may comprise displaying said message listing. In another aspect, said user interface may be an audio user interface, and presenting the received message via the user interface comprises the audible notification of said received message.

In a further aspect, the predefined criteria may comprise a keyword.

In another aspect, redacting the header may comprise replacing at least a portion of the header of the received message with alternate header information.

In still another aspect, said portion of the header may comprise a subject line or a sender identity.

There may also be provided a computer program product comprising a physical or non-transitory computer-readable medium storing code which, when executed by a device comprising a processor, causes the device to receive a message having content comprising at least a header and a body; determine that the received message content contains sensitive information by comparing the received message content to predefined criteria; in response to an instruction to provide a message listing or audible notification of messages upon receipt, said message listing or audible notification comprising at least a portion of a header of said messages, present the received message at the device via a user interface while redacting the header for said received message; and in response to a received command, present said received message content including said sensitive information via the user interface.

### Brief Description of the Drawings

In drawings which illustrate by way of example only embodiments of the present invention,

FIG. 1 is a block diagram of an embodiment of a mobile device.

FIG. 2 is a block diagram illustrating components of a host system in one exemplary configuration for use with the mobile device of FIG. 1.

FIG. 3 is a schematic diagram illustrating communication between the mobile device of FIG. 1 and an earpiece or other speech-rendering and processing device.

FIG. 4 is a schematic diagram of a message inbox listing.

FIG. 5 is an illustration of an exemplary graphical user interface for a mobile device providing a message listing for messages identified in FIG. 4.

FIG. 6 is an illustration of an exemplary graphical user interface for defining criteria in accordance with the methods described herein.

FIG. 7 is a schematic diagram of an abbreviated message listing based on the listing of FIG. 4.

FIG. 8A is a flowchart illustrating a method for assigning an alternate header and a flag to a received message.

FIGS. 8B and 8C are schematic diagrams of the message listing of FIG. 7 after the application of the method of FIG. 8A.

FIG. 9A is a flowchart illustrating a method for displaying a message mailbox in a discreet mode.

FIG. 9B is an illustration of an exemplary graphical user interface displaying a message inbox in accordance with the method of FIG. 9A.

FIG. 10A is a flowchart illustrating a method for providing audible notification of messages and for audibly presenting messages.

FIG. 10B is a schematic diagram of the abbreviated message listing of FIG. 8B after carrying out a process in accordance with FIG. 10A.

FIG. 11A is a flowchart illustrating a method for displaying a message listing after carrying out a process in accordance with FIG. 10A.

FIG. 11B is an illustration of an exemplary graphical user interface displaying a message mailbox after carrying out a process in accordance with FIG. 10A.

FIG. 12A is a schematic illustration of an agenda listing.

FIG. 12B is a schematic illustration of an agenda listing after sensitive information is identified in the agenda.

FIG. 12C is an illustration of an exemplary graphical user interface displaying an agenda reflecting the agenda listing of FIG. 12B.

### Detailed Description

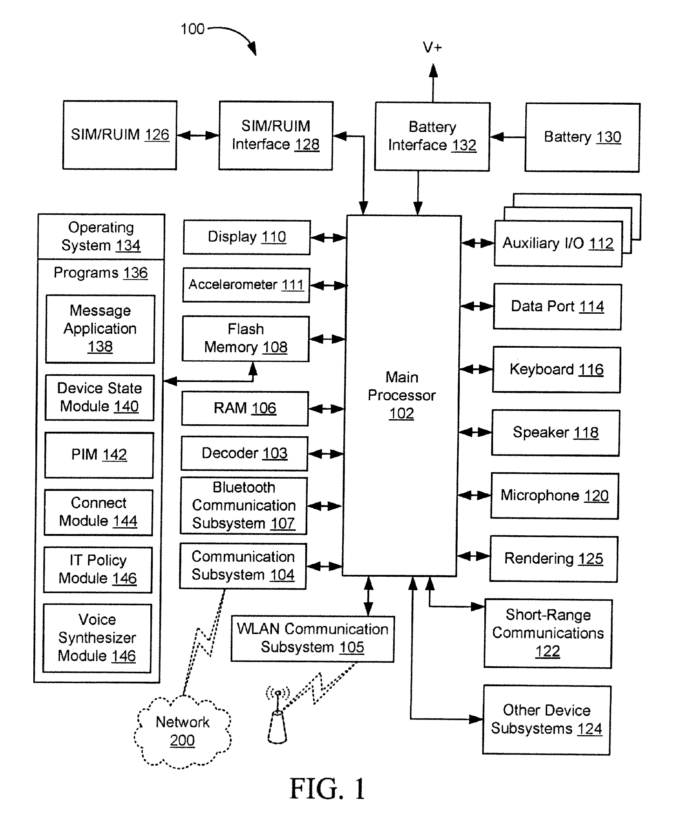

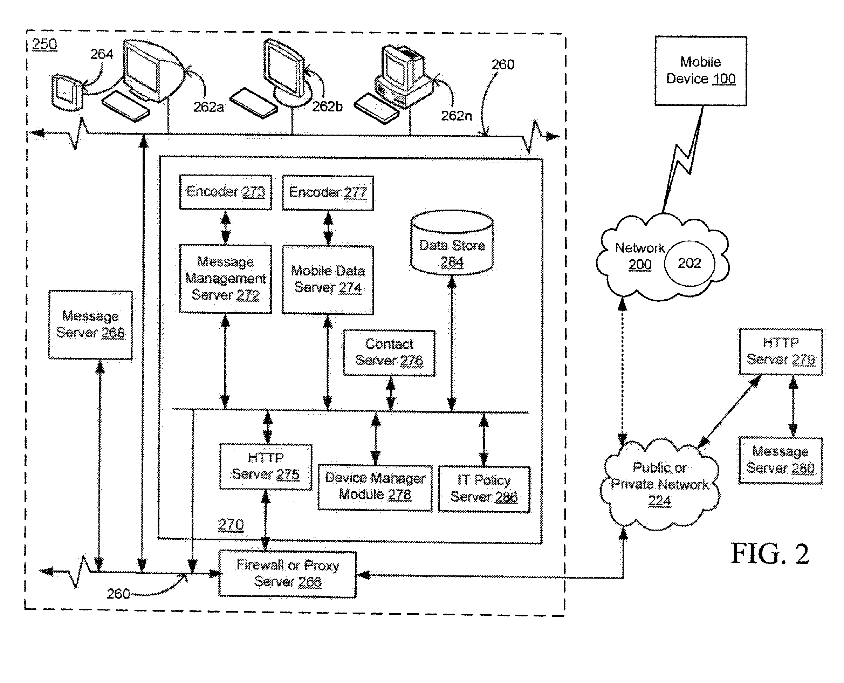

The embodiments described herein may be implemented on a communication device such as that illustrated schematically in FIG. 1. The communication device 100 may be a mobile device with two-way communication and advanced data communication capabilities including the capability to communicate with other mobile devices or computer systems through a network of transceiver stations. The communication device 100 can also have voice communication capabilities separate from the data communication capabilities. Although the embodiments herein specifically refer to a "communication device", as noted above the teachings herein may be applied to any appropriate communication or data processing device. Thus, the communication and computing devices contemplated herein may have different principal functions and form factors. The communication device may communicate with other devices over a wireless communication system or enterprise system as illustrated in FIG.2. Throughout the specification, terms such as "may" and "can" are used interchangeably and use of any particular term should not be construed as limiting the scope or requiring experimentation to implement the claimed subject matter or embodiments described herein.

FIG. 1 is a block diagram of an exemplary embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The mobile device 100 may be provided with additional communication subsystems, such as the wireless LAN (WLAN) communication subsystem 105 and the wireless personal area network (WPAN) or Bluetooth® communication subsystem 107 also shown in FIG. 1. The WLAN communication subsystem may operate in accordance with a known network protocol such as one or more of the 802.11™ family of standards developed by IEEE, and the WPAN communication subsystem in accordance with a protocol such as the 802.15.1 standard developed by the IEEE. The communication subsystems 105, 107 may be separate from, or integrated with, the communication subsystem 104 or with the short-range communications module 122. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, the short-range communications 122 and other device subsystems 124. The communication device may also be provided with an accelerometer 111, which may be used to detect gravity- or motion-induced forces and their direction. Detection of such forces applied to the device 100 may be processed to determine a response of the device 100, such as an orientation of a graphical user interface displayed on the display interface 110 in response to a determination of the current orientation of which the device 100.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM/USIM card 126 (i.e. Subscriber Identity Module or a Removable User Identity Module) to be inserted into a SIM/RUIM/USIM interface 128 in order to communicate with a network. The SIM/RUIM/USIM card 126 is one type of a conventional "smart card" that can be used to identify a subscriber of the communication device 100 and to personalize the communication device 100, among other things. Without the SIM/RUIM/USIM card 126, the communication device 100 is not fully operational for communication with the wireless network 200. By inserting the SIM/RUIM/USIM card 126 into the SIM/RUIM/USIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM/USIM card 126 includes a processor and memory for storing information. Once the SIM/RUIM/USIM card 126 is inserted into the SIM/RUIM/USIM interface 128, it is coupled to the main processor 102. In order to identify the subscriber, the SIM/RUIM/USIM card 126 can include some user parameters such as an International Mobile Subscriber Identity (IMSI). An advantage of using the SIM/RUIM/USIM card 126 is that a subscriber is not necessarily bound by any single physical mobile device. The SIM/RUIM/USIM card 126 can store additional subscriber information for a mobile device as well, including datebook (or calendar) information and recent call information. Alternatively, user identification information can also be programmed into the flash memory 108.

Although the communication device 100 principally described herein is contemplated to be a wireless communication device provisioned with wireless network connectivity functionality, it will be appreciated that the device 100 may alternatively be enabled only for short-range or fixed communications, reliant on an access point or mobile hotspot device for connectivity to public wide area networks. For example, a tablet computer may be provided with on-board hardware and software for wireless communications using only Wi-Fi or Bluetooth. If the device 100 itself lacks the required on-board hardware to communicate directly over the wireless network 200, wireless network connectivity may be provided by means of a separate dongle or tethering device over a fixed or shorter-range wireless connection to enable communication with access point or hotspot device (not shown). The device 100 can thus be provided with Internet connectivity over the wireless network 200 backhaul. In this application, "communication device" includes all such devices that may be adapted for messaging functions and are provided with at least one communications module for either fixed or wireless communication, or both, whether the device itself is provisioned with the requisite on-board hardware for wireless communication or not.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 148 which are described in more detail below. The operating system 134 and the software components 136 to 148 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 148, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system.

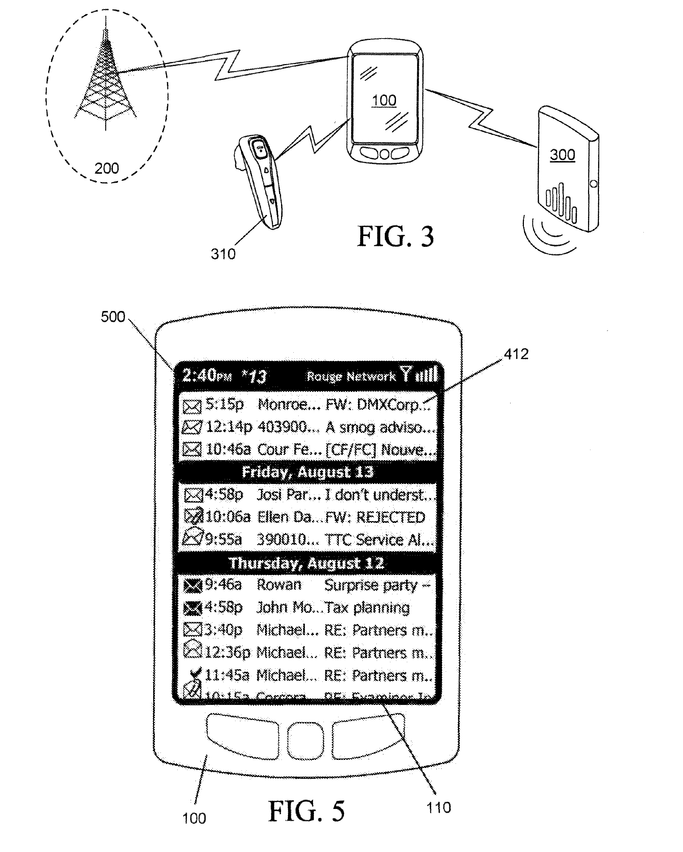

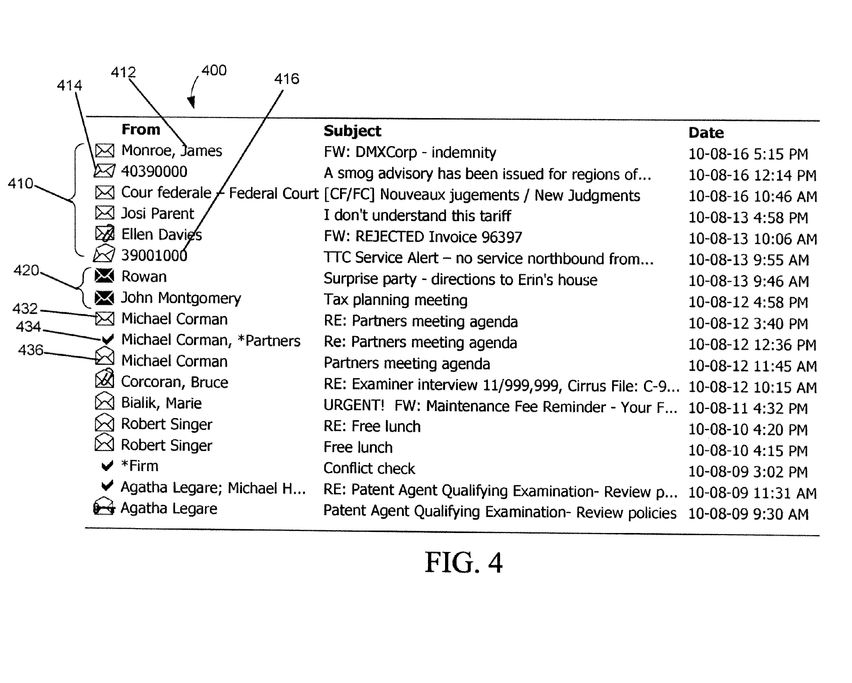

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system or with other systems accessible over the network 200. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100. The device 100 may also be configured to accept audible commands, such as spoken commands, via the microphone 120. Signals received by the microphone 120 are processed by the processor 102 using speech- or sound-recognition algorithms and interpreted as instructions to be executed by the processor.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards developed by IEEE, including Wi-Fi and Wi-Fi Direct.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112, or as noted above, for speech synthesis. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 is preferably an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

The communication subsystem component 104 may include a receiver, transmitter, and associated components such as one or more embedded or internal antenna elements, Local Oscillators (LOs), and a processing module such as a Digital Signal Processor (DSP) in communication with the transmitter and receiver. Signals received by an antenna through the wireless network 200 are input to the receiver, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP. In a similar manner, signals to be transmitted are processed, including modulation and encoding, by the DSP, then input to the transmitter for digital-to-analog (D/A) conversion, frequency up conversion, filtering, amplification and transmission over the wireless network 200 via an antenna. The DSP not only processes communication signals, but also provides for receiver and transmitter control, including control of gains applied to communication signals in the receiver and the transmitter. When the communication device 100 is fully operational, the transmitter is typically keyed or turned on only when it is transmitting to the wireless network 200 and is otherwise turned off to conserve resources. Similarly, the receiver is periodically turned off to conserve power until it is needed to receive signals or information (if at all) during designated time periods. Other communication subsystems, such as the WLAN communication subsystem 105 or WPAN communication subsystem 107 shown in FIG. 1, may be provided with similar components as those described above configured for communication over the appropriate frequencies and using the appropriate protocols. The particular design of the communication subsystem 104, 105, 107 is dependent upon the communication network 200 with which the communication device 100 is intended to operate. Thus, it should be understood that the foregoing description serves only as one example.

FIG. 2 is a block diagram illustrating components of an exemplary configuration of a host system 250 with which the communication device 100 can communicate in conjunction with the connect module 144. The host system 250 will typically be a corporate enterprise or other local area network (LAN), but can also be a home office computer or some other private system, for example, in variant implementations. In the example shown in FIG. 2, the host system 250 is depicted as a LAN of an organization to which a user of the communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's communication device 100 is situated on a LAN connection. The cradle 264 for the communication device 100 can be coupled to the computer 262a by a serial or a Universal Serial Bus (USB) connection, for example. Other user computers 262b-262n are also situated on the network 260, and each can be equipped with an accompanying cradle 264. The cradle 264 facilitates the loading of information (e.g. PIM data, private symmetric encryption keys to facilitate secure communications) from the user computer 262a to the communication device 100, and can be particularly useful for bulk information updates often performed in initializing the communication device 100 for use. The information downloaded to the communication device 100 can include certificates used in the exchange of messages.

It will be understood by persons skilled in the art that the user computers 262a-262n are typically also connected to other peripheral devices, such as printers, etc., which are not explicitly shown in FIG. 2. Furthermore, only a subset of network components of the host system 250 are shown in FIG. 2 for ease of exposition, and it will be understood by persons skilled in the art that the host system 250 will comprise additional components that are not explicitly shown in FIG. 2 for this exemplary configuration. More generally, the host system 250 can represent a smaller part of a larger network (not shown) of the organization, and can comprise different components and/or be arranged in different topologies than that shown in the exemplary embodiment of FIG. 2.

To facilitate the operation of the communication device 100 and the wireless communication of messages and message-related data between the communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 can include an IT Policy editor and an IT user property editor, not shown, as well as other software components for allowing an IT administrator to configure the communication devices 100. The support components 270 also include a data store 284, and an IT policy server 286 in communication with the various components of the host system 250 and the communication devices 100. Those skilled in the art know how to implement these various components. Other components can also be included as is well known to those skilled in the art. Further, in some implementations, the data store 284 can be part of any one of the servers.

In this exemplary embodiment, the communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the communication device 100. The wireless VPN router allows a VPN connection to be established directly through a specific wireless network to the communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the communication device 100 in this alternative implementation.

Messages intended for a user of the communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™ server, a Novell Groupwise™ server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. For instance, an e-mail client application operating on a user's computer 262a can request the e-mail messages associated with that user's account stored on the data store associated with the message server 268. These messages are then retrieved from the data store and stored locally on the computer 262a. The data store associated with the message server 268 can store copies of each message that is locally stored on the communication device 100. Alternatively, the data store associated with the message server 268 can store all of the messages for the user of the communication device 100 and only a smaller number of messages can be stored on the communication device 100 to conserve memory. For instance, the most recent messages (i.e. those received in the past two to three months for example) can be stored on the communication device 100.

When operating the communication device 100, the user may wish to have e-mail messages retrieved for delivery to the communication device 100. The message application 138 operating on the communication device 100 can also request messages associated with the user's account from the message server 268. The message application 138 can be configured (either by the user or by an administrator, possibly in accordance with an organization's IT policy) to make this request at the direction of the user, at some pre-defined time interval, or upon the occurrence of some pre-defined event. In some implementations, the communication device 100 is assigned its own e-mail address, and messages addressed specifically to the communication device 100 are automatically redirected to the communication device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the communication device 100. The message management server 272 also facilitates the handling of messages composed on the communication device 100, which are sent to the message server 268 for subsequent delivery.

For example, the message management server 272 can monitor the user's "mailbox" or "inbox" (e.g. the message store associated with the user's account on the message server 268) for new e-mail messages, and apply user-definable filters to new messages to determine if and how the messages are relayed to the user's communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the communication device 100 via the shared network infrastructure 224 and the wireless network 200. The message management server 272 can also receive messages composed on the communication device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the communication device 100 can be defined (e.g. by an administrator in accordance with IT policy) and enforced by the message management server 272. These may include whether the communication device 100 can receive encrypted and/or signed messages, minimum encryption key sizes, whether outgoing messages must be encrypted and/or signed, and whether copies of all secure messages sent from the communication device 100 are to be sent to a pre-defined copy address, for example.

The message management server 272 can also be adapted to provide other control functions, such as only pushing certain message information or pre-defined portions (e.g. "blocks") of a message stored on the message server 268 to the communication device 100. For example, in some cases, when a message is initially retrieved by the communication device 100 from the message server 268, the message management server 272 can push only the first part of a message to the communication device 100, with the part being of a pre-defined size (e.g. 2 KB). The user can then request that more of the message be delivered in similar-sized blocks by the message management server 272 to the communication device 100, possibly up to a maximum pre-defined message size. Accordingly, the message management server 272 facilitates better control over the type of data and the amount of data that is communicated to the communication device 100, and can help to minimize potential waste of bandwidth or other resources.

The foregoing description relates generally to e-mail messages, but it will be appreciated by those skilled in the art that the message server 268 may be configured to manage messages of different formats. In addition, the communication device 100 may be provisioned to send and receive messages of different types using the same or a different transport, bypassing the message server 268. Other formats may include, without limiting the scope of such services, e-mail, IM (server-based or peer-to-peer), SMS, MMS, voicemail, and VVM and the like. For example, the user may wish to access at the communication device 100 e-mail messages received by a user account maintained by the user's enterprise system 250, as well as e-mail messages received by an account provided by a third party service provider. The user may also wish to access messages provided by other messaging or analogous services, for example content published by a content provider and pushed to the communication device 100 via a push server in communication with the device 100 over the wireless network. Such content may include updates or postings received from a social networking service, a news feed, or other content feed. Such messages and other content may be received and stored in distinct data stores, folders or files at the device 100, together with messages and content generated at the device 100 for transmission via the associated service. For example, each message or content item received or generated at the device 100 may be stored as a separate message or data object in a data store associated with the service, and may be retrievable for presentation to the user using a dedicated application executing at the device 100 and associated with that particular message or content format.

In addition, the objects may be indexed for searching on the device 100 either through the dedicated application itself or through a unified search process implemented in the device operating system 134, and retrievable for presentation in a "unified inbox" displayable at the device 100. The unified inbox may be defined conceptually or visually to the user as a message inbox having characteristics similar to those employed in respect of mail clients known in the art, but it will be appreciated by those skilled in the art that the "unified inbox", as referred to herein, need not be limited strictly to such an implementation. The unified inbox may also be considered as a global message or content list, or as a unified view of message or other content information that serves as an entry point for access to a service or application executable on the device. When the unified inbox is invoked, message objects and other content may be retrieved by a collector process from one or more data stores or folders available to the device 100 for presentation in a unified inbox display. The message or content elements displayed in the unified inbox display may include, in the case of messages such as e-mail, header data such as sender, timestamp, and subject line. In addition, or alternatively, at least a portion of the message body content may also be displayed. In the case of other message types, such as instant messages, the information displayed may include message body content in place of message header content.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as a File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

A rendering circuit 125 is included in the device 100. When a user specifies that a data file is to be viewed on the display 110, the rendering circuit 125 analyzes and processes the data file for visualization on the display 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

Alternatively or additionally, the rendering engine 125 or another device subsystem 124, or a messaging application 138, may be configured to render files for non-visual presentation to the user. For example, the subsystem 124 or the rendering engine 125 may pre-process text and other content for use in speech synthesis. A speech synthesizer 148 may be provided as separate application on the device 100, or alternatively integrated into the operating system 134 or into the messaging application 138. The communication device 100 so provisioned can therefore present messages to the user audibly using the speech synthesizer via the speaker 118 or via a headset or earphones. Alternatively, the communication device 100 may transmit data wirelessly to an external audio device for presentation to the user. The data transmitted may comprise text-based message data, to be rendered for audible playback by a recipient device, or else it may comprise encoded audio data generated at the communication device 100 using its speech synthesizer module. The encoded audio data is then decoded and output via the recipient device's speakers.

Examples of external audio devices are illustrated in FIG. 3. The communication device 100 receives message data from the network 200, and can then process the data for transmission to either a headset or earpiece 310 or an audio accessory 300 using a wireless personal area network protocol such as the Bluetooth protocol. The audio accessory 300 may be a wireless control unit for use in a vehicle, and can either produce audio output directly using its own integral speaker system, or can transmit encoded signals either by a wireless or fixed connection to a vehicle stereo or other external speaker system, or even to a separate Bluetooth earpiece such as the earpiece 310. Thus, the external accessory 300 provides for audio presentation of messages or other data received from the communication device 100.

The accessory 300 may also be provided with a microphone and a speech-recognition module, so that it can receive spoken commands from the user. These commands can be processed by the accessory 300 and communicated to the communication device 100 over the wireless or fixed link for execution by the device 100. In this manner, the user may be provided with voice control over the functions of the communication device 100 and may, for example, use voice commands to navigate through a message inbox or calendar application and to command the device 100 to play back, using the speech synthesizer of either the device 100 or the accessory 300, a selected message, calendar entry, or other data item stored at the communication device 100. As noted above, the communication device 100 may itself be configured to receive and process spoken commands without the use of the external accessory 300. Similarly, the earpiece 310 may receive signals directly from the communication device 100, and may be used to play messages received at the communication device and processed using the speech synthesizer module on the device 100.

Thus, using speech synthesis technology, the user can have received text messages (such as e-mail, IM, SMS and the like) or other text-based content stored at the device 100 read out loud. The messaging application, or another application on the device 100, may be configured to automatically announce and read out loud all incoming messages as they are received, or to automatically read out loud the contents of a message mailbox, which may include messages only of a single type (for example, e-mail only) or multiple types, whether the messages therein have already been read or not. The user may therefore keep up to date on new messages received at the device 100 without having to pause to view the communication device display 110 to read the displayed message. In combination with speech-recognition technology, the user can have "hands-free" control over the device, and can issue spoken commands to the device 100 to execute. In some jurisdictions, motor vehicle legislation prohibits the use of mobile communication devices while driving unless the device is used in a hands-free mode. Thus, text-to-speech and speech-recognition accessories and utilities are particularly useful when the user wishes to monitor new messages received at the communication device 100 while driving.

Messages received and sent at the communication device 100 may include content that is sensitive, private or personal. While electronic messages of the type discussed herein are often assumed to be intended only for the addressee, in practice other people may inadvertently or deliberately read or hear messages that are not intended for them. For example, when the user is alone in the privacy of his or her vehicle, or when the user is alone in his or her office or another private location, engaging the communication device 100 in a mode in which it automatically announces and reads out loud newly received messages presents little risk of exposure of personal or confidential information to third parties. However, when there is another occupant in the vehicle or another person present in the vicinity, this other person will be able to hear the messages as they are read out loud unless the device user employs a headset rather than a speaker.

While measures may be taken to prevent messages from being read out loud on the basis of the sender identity-for example, a rule or filter may be implemented either at the communication device 100 or at audio accessory 300 to skip over messages received from specific senders-such a rule does not discriminate between the different types of messages that a given correspondent may send to the user. Not every message from a given sender may be confidential or personal, and such a rule would therefore unnecessarily suppress the message from being read out loud. Similarly, implementing a converse rule-to read out loud only those messages received from certain senders or containing predefined content-may result in the suppression of messages that the user is actually interested in having read out loud, simply because those messages were received from other senders, or fail to include the predefined content. Furthermore, the fact that a message was received may still be of interest to the user even though he or she may not wish to have the message read out loud at that time, but implementing a rule or filter of the type described above may also suppress this information as well.

Accidental disclosure of private or confidential information may also occur through the visual display of message information in a message mailbox listing. Although personal communication devices 100 such as laptops, tablets, smartphones and the like are notionally considered to be private or personal equipment, use of these types of devices in public or non-private areas where other people are present-including conference rooms, public transit, restaurant and retail outlets-exposes sensitive information to the risk of unintended disclosure, since unauthorized third parties may deliberately or inadvertently read the contents of the device display 110 while the user is reviewing messages or other content.

For example, FIG. 4 provides a representation of a possible state of a message mailbox listing at a communication device 100, which may be displayed on a device with a sufficiently large display such as a laptop or tablet computer. In this example, the message mailbox is a unified inbox, in that it is configured to include messages received or transmitted over either a variety of transports or using a number of user accounts, or both. Unless otherwise specified, "mailbox" and "inbox" are used interchangeably herein, to denote a message listing that may include messages received over one or more transports in one or more formats, as well as messages transmitted from the device 100 over any one of the transports or formats available at the device. In some embodiments, the mailbox or inbox may be restricted to only messages of a particular format (e.g., e-mail only), or only messages that are received at the device. The mailbox or inbox may also provide the user with access to one or more application entry points for specific messaging applications executable on the device 100.

The mailbox 400 of FIG. 4 includes SMS messages 414, 416 as well as e-mail messages. The e-mail messages illustrated in the mailbox 400 include messages received by the user of the communication device, denoted by envelope icons in various states, as well as messages sent from the communication device 100, as denoted by the check mark icons in FIG. 4. In addition, the mailbox 400 can include messages received using multiple accounts, and may distinguish between accounts. In FIG. 4, the set of messages 420 in the mailbox 400 are visually distinguished from the remaining e-mail messages to indicate that they were received at a user's personal account provisioned at the device, rather than at an enterprise mail account managed by the message server 268. It will be appreciated that other views of message mailboxes may be available at the communication device 100; for example, a messaging application on the device 100 may provide separate views of messages sent from the device, received at the device, associated with a single account, and so forth. However, the unified view 400 of FIG. 4 provides the user with an at-a-glance summary of the state of outgoing and incoming messages at the communication device 100.

Display of the mailbox 400 in the state shown in FIG. 4 will therefore include information about the sender or recipient's identity; the subject line; and the date and/or time at which the message was sent or received. FIG. 4 also includes corresponding icons, as described above. Not all of this information need be included in a message mailbox listing, but these information elements represent the set of typical message information comprised in a listing. Where space is a constraint in displaying a message listing, one or more of these information elements may be omitted from the display; additionally or alternatively, a column of information This type of information will be understood by those skilled in the art to be information commonly included in message headers, particularly e-mail headers compliant with Internet Message Format RFC 5322 published by the Internet Engineering Task Force (IETF), and/or with its predecessor and successor standards. Although the exemplary embodiments described here are described with reference to e-mail, it will be readily appreciated by those skilled in the art that the embodiments described herein may be applied to the other message formats mentioned herein. Other message formats can include message header information, such as sender identity, recipient identity, subject line, and timestamp. In some message formats, one or more of these types of header information may be excluded.

While it is usually the body of a message, not shown in FIG. 4, that contains sensitive or private information, even the cursory message information shown in FIG. 4 may reveal confidential information. For example, the first message 412 listed in the mailbox 400 includes the subject line "FW: DMXCorp - indemnity". Although the subject line is terse, this subject line includes a client or customer name ("DMXCorp") that may be confidential. While the user would typically view his or her message inbox listing in relative privacy, on occasion he or she may view the listing in a public or quasi-public area, where another person may be able to see the message inbox listing on the device display 110 as well. Additionally, some messaging applications are configured to include at least a portion of the message body content in an inbox message listing, similar to the presentation of the SMS message 414 in the mailbox 400. Although the header information shown in FIG. 4 does not reveal detailed information, the identity of the user's client or customer, or the user's activity as it can be inferred from the subject line information or from the identity of the user's correspondents, may be confidential information that the user does not wish to have inadvertently disclosed in this manner.

Even when the message listing of FIG. 4 is abbreviated for display on a communication device 100 having a smaller form factor, such as a smartphone, the information that is displayed may still reveal sensitive information should a third party happen to view the communication device display. FIG. 5 illustrates an exemplary graphical user interface 500 that may be displayed on the screen 110 of a smaller communication device 100. Even with its abbreviated display, the graphical user interface 500 still includes sufficient subject line information for the first message 412 such that the sensitive information, the client or customer name, may be viewed by unauthorized third parties.

In the above scenario, the risk of exposure of confidential information when the communication device is used in a non-private location can be minimized by use of a physical privacy filter that obscures the display 110 at oblique viewing angles. The addition of such physical privacy filters, however, adds to the cost of manufacture of the device 100 and in some cases requires the user to obtain and secure an additional component to the communication device display 110.

Accordingly, devices and methods are provided herein for selective visual and audio rendering of message listings and content, and in particular to determine when to permit full display of message header information in a mailbox view displayed on the device 100 and when to suppress at least part of the message header information, when to permit full notification of an incoming message when a text-to-speech or audible message notification function is engaged at the device, and when to suppress at least part of the message notification from being announced audibly. The embodiments herein thus provide for selective display or notification of messages in a manner that selectively suppresses portions of the message header information or other components of the typical message display, but without suppressing the message display or notification completely, and without denying the user access to the message itself at the communication device 100.

To implement this solution, a set of criteria such as conditions or keywords may be initially defined, either as default settings or as user-defined settings. When the device 100 is operating in a "discreet" or private mode in compliance with these criteria, messages stored or received at the communication device 100 are displayed in message mailbox listings, or automatically announced using a speech synthesizer operating in conjunction with a messaging application, such that the message listing or announcement is redacted, i.e. presented in a user interface in an edited or altered form in which at least a portion of sensitive information contained in the message is removed in the message listing or announcement. The complete message itself, however, is still available for presentation to the user at the communication device 100 if the user chooses to view the message or have it played back, regardless of its sensitive content.

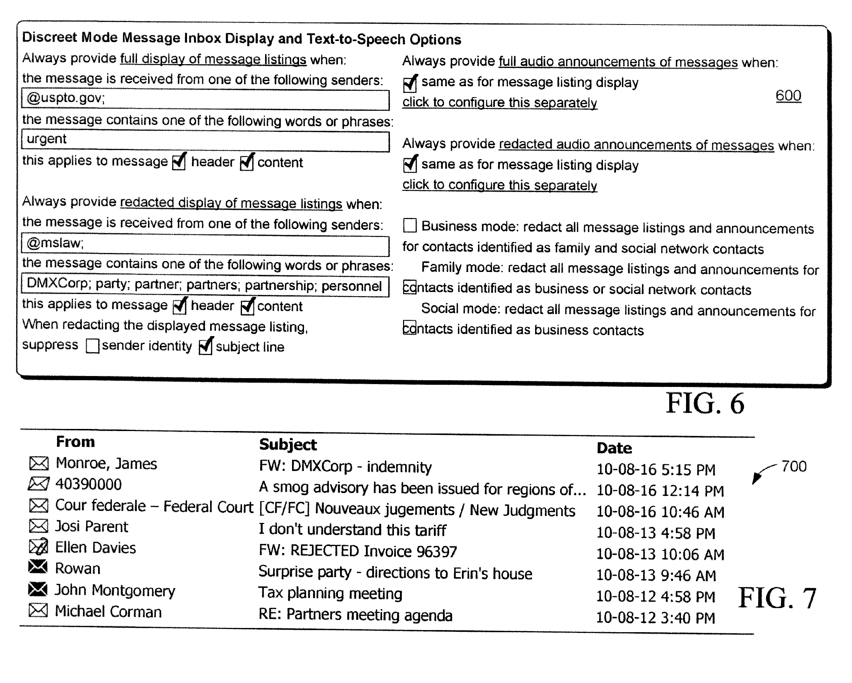

FIG. 6 illustrates an exemplary user interface for setting such conditions or keywords. The conditions and keywords may be set at the communication device 100, or alternatively at a server authoritative for setting IT policies and security rules for the device 100, such as the host system 250 and the IT policy server 286. If the criteria are set at the IT policy server 286, the criteria may then be pushed to the device 100 as part of a software update or automatic synchronization, or alternatively upon instruction by the user or an administrator. If the criteria are set at the device 100 instead, the criteria may subsequently be transmitted to the IT policy server 286 for storage, for example for backup purposes should the communication device 100 need to have its security settings restored.

The criteria may be defined with reference to sender identities, as discussed above. Thus, if a message is received from a particular sender identified via the user interface 600, it may either always be fully displayed in message mailbox listings or always be the subject of a full audio announcement; alternatively, if the message is received from another particular sender identified in the user interface 600, it may always be displayed in a "discreet" or private mode. Although not shown in FIG. 6, the user interface display may also provide for configuration of discreet mode settings according to the identity of the recipient(s): for example, messages that are addressed to mailing lists in which the user of the communication device 100 is a participant, or messages that are sent to groups that include the user as well as others outside the domain to which the communication device belongs, may be automatically deemed to be non-private and not subject to display or audio announcement in discreet mode, whereas messages that are addressed only to recipients within the user's domain may still be subject to display or audio announcement in discreet mode.

In addition, keywords may be defined for use in determining whether a particular message should be presented in discreet mode, or whether it can be presented in a normal, non-discreet mode. Examples of words that will result in the message always being presented normally include, in FIG. 6, the word "urgent", whereas words that will result in the message always being displayed in discreet mode include the word "partners" and "personnel". The system may be configured to either search for these words in the message header, the message body ("content"), or both. The various criteria may be set together for both visual and audio presentation of messages, or else defined separately for visual and audio presentation. These various rules may be implemented hierarchically; for example, if a conflict arises between two criteria defined in FIG. 6, the criterion associated with redaction of the message presentation (i.e., the "discreet" presentation of the message) will "win", and will be applied so as to force the message to be presented in discreet mode. The criteria set may be applied to messages from all contacts at the device, although in some embodiments, different settings may be configured for contacts identified as business, social, or personal (or family) contacts, as well as for contacts that are not identified by the user as belonging to any particular category or type. For ease of configuration, settings configured for one type of contact may be inherited by other contact types. Further, the embodiments described herein may be applied not only to received messages, but also to messages transmitted from the device 100 which may be included in mailbox listings or rendered for display or presentation to the user.

Thus, when a message mailbox listing or audio notification of messages is invoked at the device 100 or at an accessory device 300 in communication with the device 100, these criteria will be applied to determine whether an individual message is to be presented in discreet mode. For the purposes of illustration, an abbreviated message listing 700 in a first state, shown in FIG. 7, will be used. This message listing includes, in reverse chronological order, all of the "unopened" messages, i.e. the messages that have not been "read" or accessed for reading, in the mailbox 400 of FIG. 4. It will be understood by those skilled in the art that, in accordance with conventional terminology used in the art, a "read" message is one that has been accessed by the user such that the user is able to peruse or review all or part of the content of the message, or one that the user has designated as having been "read" or "opened" using a "mark as read" or "mark as opened" function available in a messaging application. In the case of an e-mail message, "reading" the message may comprise the action of instructing the communication device 100 to display at least a portion of the message body content in the display 110, or instructing the device 100 or accessory device 300 to read or have read the message body out loud using a speech synthesizer. Because it is presumed that the message, so presented, has been read by the user, a message having been presented in such a manner is often referred to as having been "read" and is accordingly flagged in the message store with a "read" flag. It is possible that the user has not actually perused, reviewed, or even looked at or listened to the content of the message, even though it is considered to have been "read". Regardless, this terminology is employed because it will be understood by those skilled in the art. Similarly, a message that is "unread" or "unopened" is one that has not been accessed such that the user may have been able to peruse an entirety of the message content. The message may be expressly flagged to indicate its unread status or read status. Although in the embodiments described herein flags are schematically depicted as icons or similar indicators of message status, it will be appreciated that these depictions are intended for ease of reference only. As contemplated herein, messages are provided with identifiers to identify their status (e.g., "read", "unread", "new"), and the terms "flag" and "identifier" are used interchangeably. The flag may be a bit, byte or other data element either stored within a message itself, or in association with the message, for example in a message store. A flag may be set in the message's header by editing the header to include a key-value pair reflecting the flag status.

If the messages identified in FIG. 7 were to be displayed on a communication device 100 in a message mailbox listing, the result may be the graphical user interface 500 of FIG. 5, which as noted above may include sensitive information that is potentially viewable by a third party. If speech-synthesizer based audio notification of incoming messages were implemented at the device 100 or using an accessory in communication with the device 100, the messages of FIG. 7 may be announced out loud. Rather than simply reading the header of the message out loud without any preface, the notification may include more "friendly" content to provide context to the user. For example, if the messages are announced audibly to the user as the messages are received, and the most recent message shown in FIG. 7 is newly received, the device 100 or the accessory 300 may play the speech-synthesized announcement, "New message from James Monroe about DMXCorp Indemnity, received 5:15 pm on August 16^{th}". In other embodiments, if the message mailbox that is currently active includes messages associated with different accounts, or if the device 100 or accessory 300 is configured to announce messages received over different transports, the announcement may also identify the account from which or the method by which the message was received. Alternatively, the announcement may be even terser, simply announcing the name of the sender and the subject line.

If, on the other hand, the message listing in FIG. 7 illustrated a current state of the mailbox 700 in which the eight messages listed were the most recently received but not yet reviewed or read by or announced to the user, in response to a user command to review new messages in the mailbox 700 audibly, the device 100 or the accessory 300 would provide an audible notification of each of the eight messages in the manner described above. The notifications would typically be ordered according to when the messages were received, i.e. in chronological order, although the order in which inbox messages may be altered to reflect user preference or priority. For example, messages that are marked with higher priority or importance according to the message header data (e.g., according to an "Importance:" header field in an e-mail message) may be announced before lower priority messages are announced to the user. In the example of FIG. 7, the first notification would be in respect of the first-received message (e.g., "New message from Michael Corman about Partners meeting agenda" received at 3:40 pm on August 12^{th}") and the last notification would announce the most recently received message (e.g., "New message from James Monroe about DMXCorp Indemnity, received 5:15 pm on August 16^{th}").

Once an audible notification is provided in respect of a message, a flag or indicator associated with that message may be set to indicate that the message is no longer "new" or newly received, and that a notification of receipt of the message need not be provided to the user again. The flag, or an additional flag, may also indicate whether the announcement of the new message had been provided to the user audibly or visually. Thus, for example, once the audible notification is provided to the user, two flags may be set or changed: a first flag indicating that the message is new may be removed, or else altered to indicate that the message is not new, but is unread; and a second flag that indicates that the audible notification had been provided. By including this additional flag reflecting the audible notification, it may be possible to subsequently search for those messages that were audibly announced, so that the user can review only those specific mailbox messages at a later date.

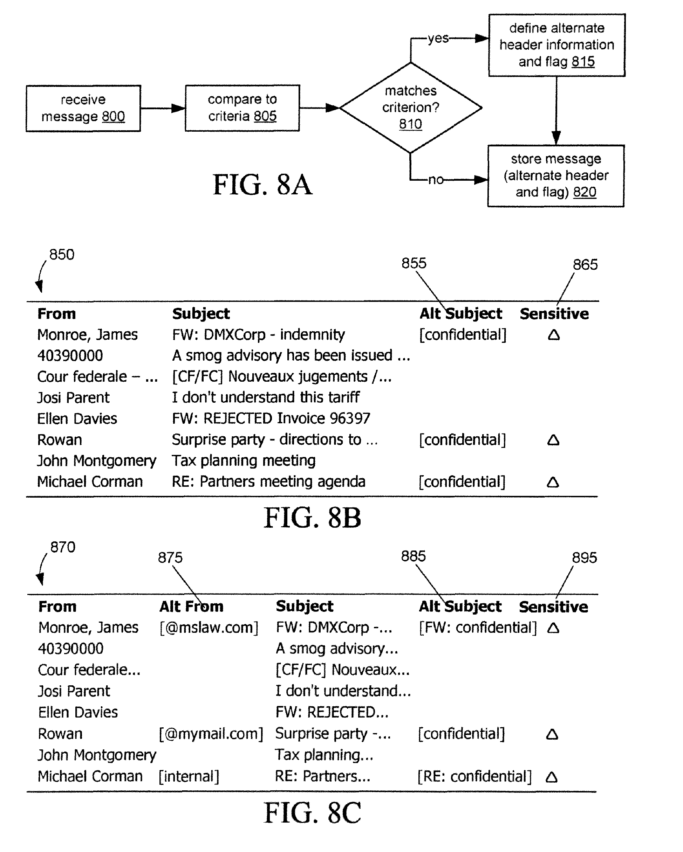

As noted above, these messages may include sensitive information. Therefore, when messages are received at the communication device 100, whether from the host system 250 or from another source over the network 200, the device operating system 134 or a messaging application 138 executing on the device, or another module of the device 100, may apply the criteria set as described above in connection with FIG. 6 to determine how the message should be handled for the purpose of audible or visual notifications to the user. As shown in FIG. 8A, as a first step, the message is received at the communication device at 800. At 805, the various rules or other criteria defined as explained above are applied to the received message. For example, the device 100 may scan the message content for strings matching the keywords defined as explained above, and may compare the sender address with the addresses identified as explained above. At 810, a determination is made whether the message matches any of the defined criteria that define the message as one to be displayed in a redacted form when the device is operating in the discreet mode. If the message does match these criteria, then for the purpose of message listing display and message notification in the discreet mode, the message header information is redacted. At 815 alternate header information is defined for the message, and a flag is set in association with the message to identify the message as a "sensitive" message, i.e. one containing sensitive information based on the fact that it matches at least one criterion associated with discreet mode. At 820, the message is stored if it has not already been stored in the device's message store, and the alternate header and the flag are also stored in association with the message if defined.

The alternate headers that are defined for the flagged messages may comprise simple tags or labels that readily identify the message to the user as one that is possibly confidential in nature. FIG. 8B illustrates a possible state of the message listing of FIG. 7 after execution of the process of FIG. 8A. In FIG. 8A, select features shown in FIG. 7, such as icons and datestamps, are omitted only for brevity. In the message listing 850, an alternate subject field 855 is defined for those messages for which the sensitivity flag 865 has been set. In this example, the alternate subject field is defined to read "[confidential]". However, the alternate subject field content may be defined by the user or by an administrator to provide other information. In addition, other header information may be altered, such as the sender field. FIG. 8C illustrates a further example of a message listing 870 with sensitivity flags 895 set for the same messages as in FIG. 8B, and also in which the entries in the alternate subject field 885 now also reflect the message's relationship to a parent message (e.g., whether the message is a reply to or forwarding a previous message, whether that previous message was received or stored at the communication device 100 or not). As noted above, flags such as the sensitivity flags 865, 895 are represented by icons in the "Sensitive" column of their respective figures; it will be appreciated, however, that these figures are merely schematic representations, and the flags themselves may be bits or other data portions stored in association with their corresponding message, and need not comprise graphical indicators. In addition, an alternate "from" field 875 has been defined, and the values set for that field reflect only the sender's domain (e.g., "@mslaw.com") rather than the sender's full name, address, or friendly name. In other embodiments, the alternate from field may reflect the sender's first name or last name only, or some other identifying information so that the user of the device 100 is given a hint regarding the sender identity.

The foregoing process is described as being executed upon receipt of each message at the communication device 100. This way, once an instruction is received to review the contents of the mailbox and to provide either a visual listing or an audible notification, there is no need to process the contents of the mailbox at that time. Alternatively, the foregoing process may be executed each time a command is received to display a message mailbox listing, or to commence notification or reading of messages in the mailbox. Further, the first time criteria are defined, or whenever criteria are changed, the device 100 may execute the method of FIG. 8A against all of the messages currently stored in the device's message store.

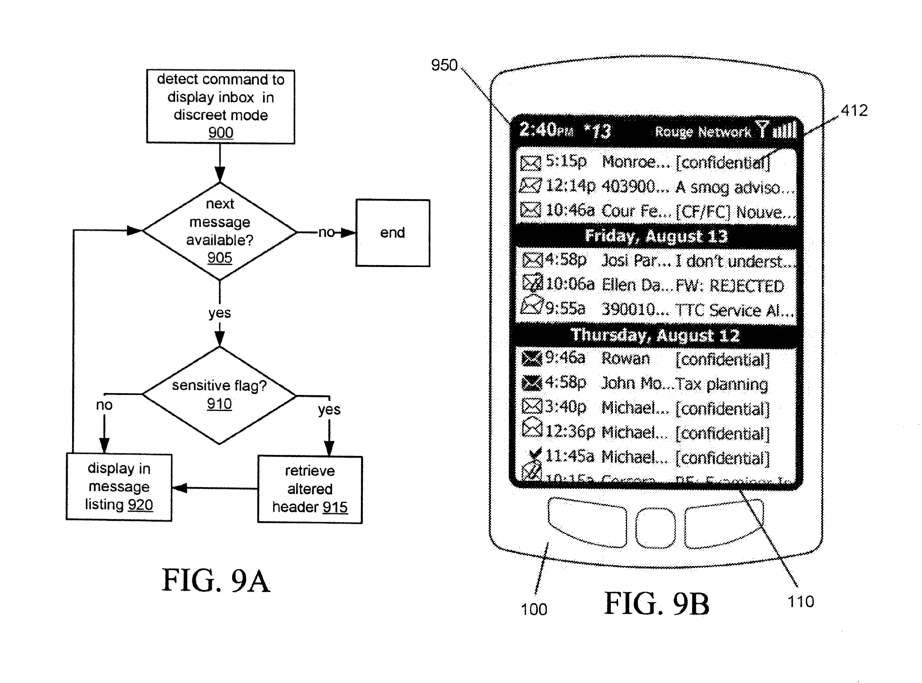

Once messages in the mailbox have been processed and flagged as described above, a process such as that illustrated in FIG. 9A may be undertaken. When an instruction to display the message mailbox listing including message header information such as sender identity and subject line is received at 900, a determination is made whether a next message is available for display in a message listing at 905. If there are no further messages-for example, if all messages available from the message store for that particular mailbox view have been checked, or if a limit on the number of message listings that may be rendered for display on the display 110 has been reached-then the process ends. Otherwise, at 910, the message metadata, such as the message header information and any message flags, is retrieved and it is determined whether the next message is associated with a sensitivity flag. If it is not associated with the sensitivity flag, then at 920 the message listing for that message is displayed using any header information suitable for the format of the message listing display. If, however, it is associated with the sensitivity flag, then at 915 the altered header information is retrieved from the message store if it has not already been retrieved, and the altered header information is used to replace the received header information for that message for display in the message listing at 920.

The effect of such a process based on the altered message header information shown in FIG. 8B is illustrated in the graphical user interface 950 of FIG. 9B. It can be seen that for the first message 412, the header information displayed in the graphical user interface 950 has been replaced so that the subject line reads "[confidential]". Similar alterations have been made to other messages shown in the graphical user interface 950. This embodiment still provides some context to the user regarding the received information, since information about the sender is still visible in the display 110. In another embodiment, even more information is redacted from the displayed header information by redacting the sender information, leaving only a subject line indicator that the message is confidential or sensitive. In some message mailbox views, a portion of the message body may also normally be displayed in the mailbox view (for example, the first line of a message may be displayed). To enhance privacy and minimize the risk of disclosure of sensitive information, all portions of the message displayed in the mailbox listing can be redacted, such that there remains only a basic indication to the user that a confidential message was received. Thus, the user is still provided with a complete message listing reflecting the current state of the message mailbox, but potentially sensitive information, as defined by the user or an administrator, is obscured from view when the message listing is displayed. However, the listing for a message flagged as sensitive, such as the message 412, is not completely suppressed from the display. The user is therefore still able to select that message in the graphical user interface 950, and to input a command to view the content of the message as usual, should he or she wish to do so. The user has complete access to the message store and the messages therein, but is provided with a mechanism to reduce the risk of inadvertent disclosure of sensitive information in the messages while reviewing a message mailbox.

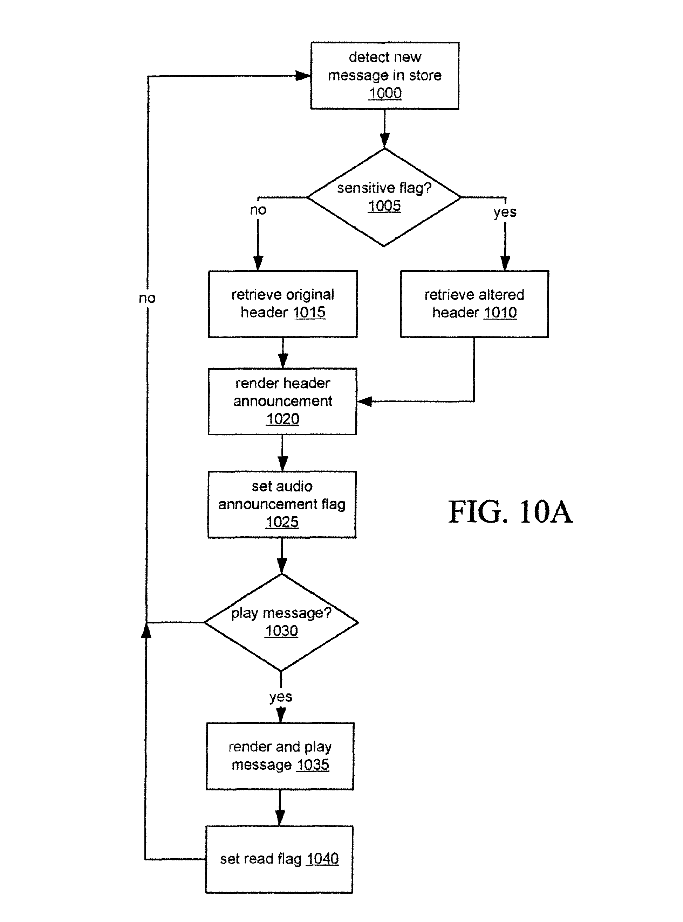

FIG. 10A illustrates a process for providing audible notifications of messages that may be executed at the device 100, optionally in conjunction with an audio accessory 300, after the process of FIG. 8A is carried out. The device 100 may be configured to announce newly received messages audibly in response to an instruction received from a user. The audible announcement may include at least some message header information, such as the identity of the message sender and at least a portion of a subject line. When a new message is detected in the message store at 1000, for example by a listener process that checks for storage of new messages once received at the device, and once the message has been processed in accordance with FIG. 8A, it is determined at 1005 whether the sensitive flag has been set. If it has been set, then at 1010 the altered header information is retrieved. Otherwise, at 1015, the original header information is retrieved. The header content, whether original or altered, is then rendered for the purpose of providing an audible announcement of the new message at 1020. Once this is done, the device 100 may set an audio announcement flag at 1025, which serves to indicate that the message is no longer "new" since it has been announced, and also that it was announced to the user audibly.

In response to the audible notification, the user may issue an instruction to display or present the message content audibly. Thus, at 1030, it is determined whether an instruction to present the message content has been received. If not, the process returns to 1000, where it waits for detection of a new message in the message store. If, however, an instruction is received to present the message, then at 1035 the message is presented to the user. This may take place by rendering the message content using a text-to-speech module. Once the message has been rendered in this manner a read flag associated with the message may be set. Thus, in this example, two flags will have been set: both the read flag and the audio announcement flag.

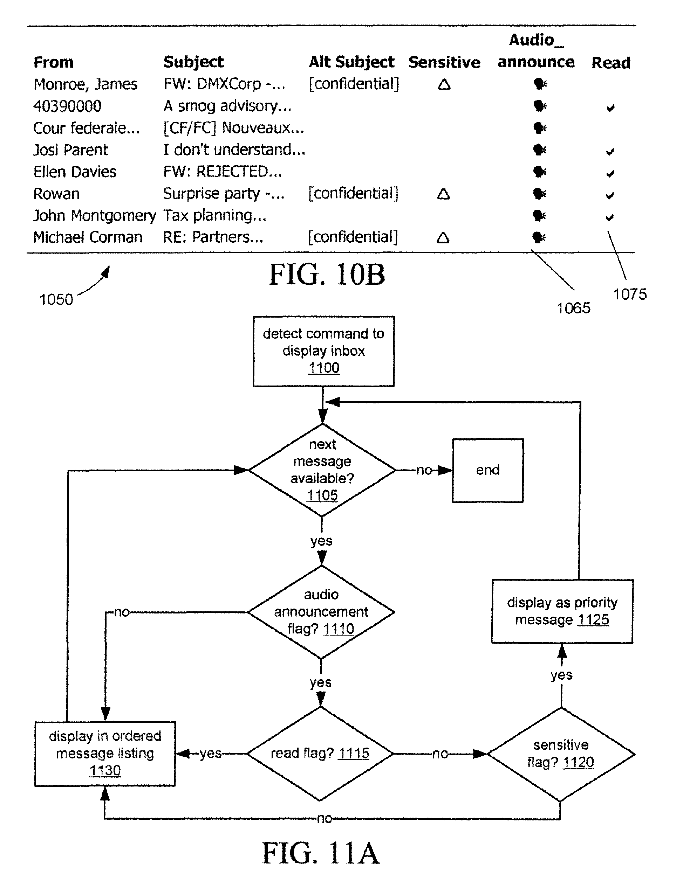

The effect of the process of FIG. 10A on the state of the messages is illustrated in the listing 1050 FIG. 10B. In addition to the previously defined sensitivity flag, the message are associated with an audio announcement flag 1065, which indicates whether an audible notification of receipt of the message has been provided, as well as with a read flag to indicate whether the content of the message body had been presented, whether visually or audibly. In this embodiment, a message that is flagged with both the audio announcement flag and the read flag means that it has been read by rendering the content as speech, rather than displayed on the display 110 of the device 100. If the message content is subsequently viewed on a device display 110, the audio announcement flag may be removed to indicate that the current state of the message is simply that it has been read. By having the additional audio announcement flag, it can be easily determined which of the messages had only been listened to by the user, rather than read visually. In the example of FIG. 10B, two messages flagged with the sensitivity flag have been audibly announced but not read, and one message that was audibly announced but not flagged with the sensitivity flag was not read.

Based on the state of the message listing 1050, it can be seen that all new messages in the mailbox have been audibly announced to the user. Therefore, the next time an instruction is received to announce new messages audibly to the user, no new notification will be rendered and played, unless a further new message, not shown in FIG. 10B, is received at the communication device 100. Accordingly, the current state of the message mailbox in FIG. 10B, for the purpose of audible notifications, is that no messages remain as "new" messages. However, the user, after receiving audio notifications, may wish to have an indication the next time the mailbox listing is viewed on the communication device 100 which of the messages was only audibly notified rather than visually displayed. In other words, while some messages may no longer be "new" or "unread" once the message listing or new message notifications are presented to the user via a first user interface, in this case an audio interface, when the user reviews the same message listing via a second user interface, such as a device display. The current state of the message mailbox for the purpose of visual review may be different than the current state for the purpose of audio review reflected in FIG. 10B.

A process for displaying the mailbox listing after executing the method of FIG. 10A, resulting in an audio message mailbox state such as that of FIG. 10B, is illustrated at FIG. 11A. At 1100, a command is detected to display the message mailbox. At 1105, it is determined whether there are further messages available for retrieval, as described above. If there are no further messages, the process ends. If there are further messages, then at 1110 it is determined whether the audio announcement flag was set for the next message. If it was not set, the message may be displayed in the mailbox graphical user interface as usual at 1130; for example, in an ordered reverse chronological listing, and reflecting its state as a new message, a read message, and so forth. If the audio announcement flag is set, then at 1115 it is determined whether the read flag has been set. If both the read flag and the audio announcement flags have been set-that is to say, the message is marked read because it was read out loud-again, it is displayed in the ordered message listing at 1130, optionally with an icon indicating that it had been read audibly rather than visually. When a message is displayed in the ordered listing at 1130, the process also determines whether the sensitivity flag had been set for that message, and retrieves altered header information for display accordingly.

If, however, the read flag was not set for a message that had the audio announcement flag set, meaning that the arrival of the message was announced audibly but it was not read at all, then at 1120 it is determined whether the sensitivity flag had been set for the message as well. If the sensitivity flag had been set, then the message had already been flagged for special handling because of the presence of certain content in the message, or because of other criteria. It may therefore be more likely that this message requires special attention from the user. Therefore, if the sensitivity and audio announcement flags are set but the read flag is not set for the message, at 1125 it is identified as a priority message and displayed accordingly. Display of a priority message may simply involve displaying the message in association with an icon indicating a higher priority status, or else the priority message may be displayed at the very top of the mailbox listing or in a separate display region, where it is more likely to be noticed by the user. If, on the other hand, the sensitivity flag was not set for the message and it was audibly announced and not read, it may still be displayed in the ordered listing at 1130 along with other messages, and not promoted to higher priority.

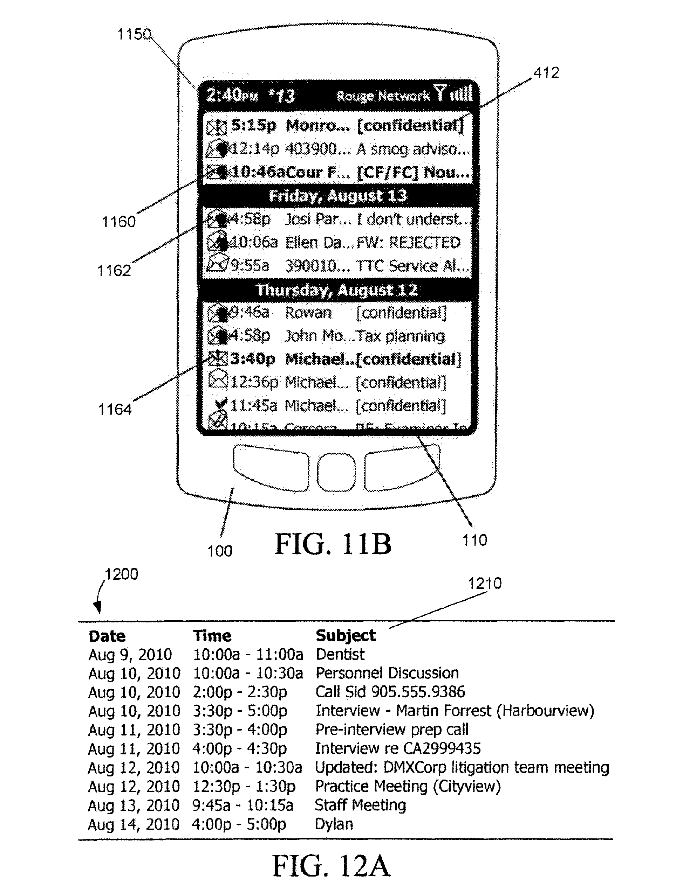

The effect of this process on the display of messages is illustrated in the graphical user interface 1150 of FIG. 11B, which depicts a further message listing. It can be seen in this example that two messages 412 and 1164, which were flagged as sensitive, audibly announced, but not read in FIG. 10B, are now marked with priority icons to visually distinguish them from the other messages displayed in the graphical user interface 1150. As noted above, these messages now marked as priority messages may be displayed in a separate region of the display 110 or graphical user interface 1150. The remaining messages that were audibly announced are now marked with a further icon that indicates the audio announcement status, such as messages 1160 and 1162. The user may thus easily visually identify those messages for which audible notification was given. Those messages that were not read in response to the audible notification, such as the message 1160, is marked with a closed envelope, which is commonly understood in the art to represent a message marked as unread. Those messages that were read are marked with an open envelope, such as the message 1162. It can also be seen that the subject lines of those messages that were flagged with sensitivity flags remain altered, such as in message 412. In addition, those messages that were marked as being audibly announced but not read are also depicted as new messages in the graphical user interface 1150, in this example by presenting the header information or altered header information in a boldface type so as to visually distinguish the messages from the other read messages.

The current state of the message mailbox, as displayed visually in the graphical user interface 1150, thus differs from the current state of the message mailbox as it would now be handled by an audible notification process. According to the audible notification process, all messages are no longer "new", and will not be made the subject of a further audible notification since the audible announcement flag was set. However, according to the visual display process of FIG. 11A, those messages that with the audio announcement flag set are still indicated as "new" if they are not marked read, even though they had been audibly announced. Maintaining their status, visually, as "new" assists in the identification of those messages in the visual display of the mailbox. Further, those messages that were audibly announced, unread, and also flagged as sensitive are now marked as priority messages for the purpose of visual display of the mailbox. Flagging the messages in this manner to reflect their current status and interpreting the message status with reference to the context in which the messages are being presented (i.e., audibly versus visually) thus can assist in search and retrieval of messages. In a further variation, a further message mailbox view may be provided at the device 100 for reviewing sensitive messages. This further "confidential" mailbox view can present messages retrieved from one or more of the various message stores on the device, and filter them according to sensitivity flag status such that this confidential mailbox view only lists those messages flagged as containing sensitive information. The user may then access this confidential mailbox at his or her convenience to review the messages listed therein. The confidential mailbox view may be accessible by actuating an icon displayed on a home screen displayed on the device 100, or alternatively in response to a menu command. If the confidential mailbox view is provided on the device, messages flagged as sensitive may be completely suppressed from other mailbox views, although they can still continue to be listed in redacted form as described above.

In one embodiment, the above processes and systems may be automatically implemented so long as criteria are defined for identifying potentially sensitive messages. In another embodiment, however, the device 100 is configured to display or announce the messages in this discreet mode in response to a command to do so. For example, the user may select a service entry point icon displayed on a user interface of the device 100 to initiate an application that displays messages in this discreet mode. As another example, the user may initiate the discreet mode using another setting on the device 100. If the device 100 is configured to receive and process voice commands, the user may initiate the discreet mode and review of messages by speaking a command such as "read my messages, discreet mode" in order to initiate audio review of the message mailbox in discreet mode, or may expressly command the device to review the mailbox in a non-discreet, "normal" mode, with the command "read my messages, I'm alone", which indicates to the device that discreet mode is not required. Thus, the user may selectively place the communication device 100 in discreet mode, in which it presents messages with redactions as described above.

In addition to the foregoing criteria, additional rules may be instituted to automatically redact or suppress messages originating from certain senders without requiring manual entry of all senders in the user interface 600 of FIG. 6. These rules may reference a contact data store or stores at the communication device 100, in which contacts are identified as business, family, or social network contacts. Contact entries in the contact data store may be tagged by the user as falling within one of the classes of business, family, or social, and the device 100 may be set in one of a business, family, or social mode, in which messages arriving from certain classes of contacts are automatically suppressed or redacted for the purpose of audio notification or visual display of the message mailbox. In this way, for example, when the user is in a work environment, messages from social contacts may be suppressed altogether, whereas when the user is in a social context all messages may be displayed or announced, or else messages from non-social contacts (e.g., business contacts) are redacted or suppressed altogether.

The foregoing embodiments were described generally in the context of messages received at a communication device 100, in which any filtering, criteria matching, flagging and redaction takes place at the device after the message is received. If the messages are received at a message server associated with the device 100, the status of the messages may be synchronized with or updated at the message server. As noted above, PIM data items such as messages can be mirrored or synchronized with the host system 250. Accordingly, the message server 268 can be updated to reflect the flag status of messages and the current state of the message mailbox. If the messages are accessed at or retrieved from the message server 268 from another communication device, the message server can provide the other communication device with messages with appropriate flags already embedded with or associated with the messages. Thus, the other communication device, if suitably configured, can then implement the redaction techniques described above.

The foregoing techniques may also be implemented at a message server rather than at the communication device 100 itself, for example as a value-added service provided by a third party service provider. The communication device 100 (or one of the computing devices 262a..n shown in FIG. 2) may be in communication over the public network 224 with the web server 279 that provides access to a message server 280 in communication with the server 279. This message server 280 may be considered to be a third-party server, as it is not within the enterprise system 250. The user, or an administrator, may configure criteria such as those described in relation to FIG. 6 via the web server 279 for application by the server 280. When a message is received at the server 280, the server 280 executes the same processes described above to identify messages with potentially sensitive information, and to flag them accordingly. The server 280 may then generate alternate header information for use when displaying message listings or presenting notifications to the user.

If the user accesses the messages stored at the server 280 over the public network via the web server 279, this access may take place using a browser client application executing at the communication device 100 rather than using a dedicated messaging application. Thus, instead of downloading messages directly from the server 280, as the communication device 100 may receive messages from the enterprise message server 268, the communication device 100 instead receives data in the form of webpages or other responses to HTTP queries. For example, the communication device 100 may access a message mailbox listing generated by the server 280 and delivered via the web server 279, for the device 100 to render using the browser client for display or for audible presentation to the user. Accordingly, the message server 280 will generate a message mailbox listing with appropriate redactions as described above for presentation to the user via a user interface at the device 100 by transmitting the listing to the communication device 100. If the user wishes to view one of the messages listed with redactions, the user may invoke a command (for example, by clicking on a hyperlinked message header in the displayed listing) to retrieve the complete message for presentation at the device 100. In a variation of this embodiment, individual messages, including complete and redacted header information, may be transmitted to the communication device 100 via the web server 279. The browser itself may be configured, for example using scripts or webpage instructions executed at the device 100, to render the received message header information, with redactions, in a message listing.

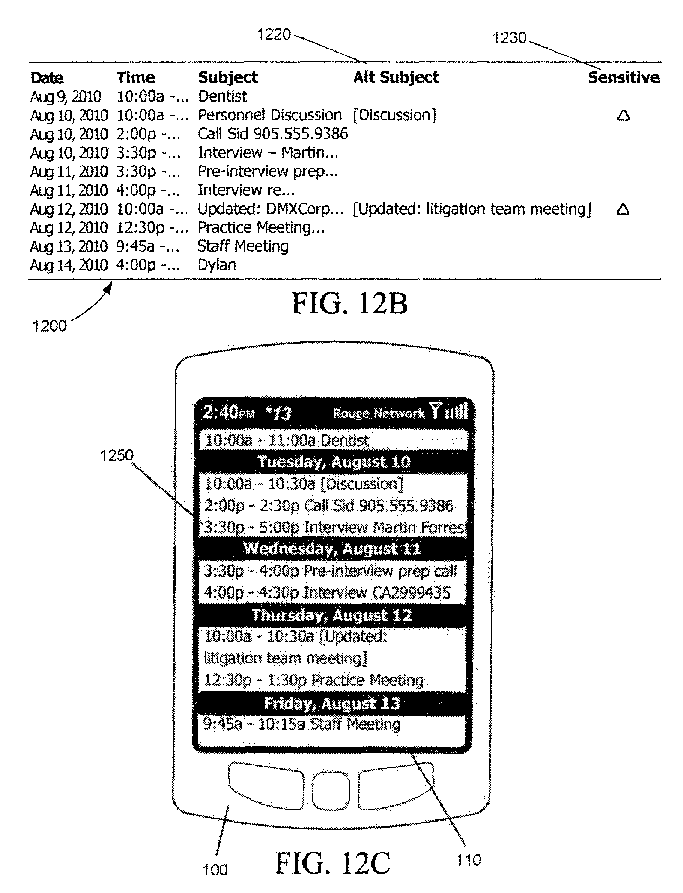

The systems and methods disclosed herein are presented only by way of example and are not meant to limit the scope of the invention. Other variations of the systems and methods described above will be apparent to those skilled in the art and as such are considered to be within the scope of the invention. For example, the foregoing embodiments may also apply to different types of content beyond messages, to include content feeds such as RSS feeds and news feeds. Similarly, the foregoing methods may also be applied to other PIM content such as contacts and calendar events. Turning to FIGS. 12A, 12B and 12C as one example, the foregoing criteria may be applied to a schedule display on a communication device 100 to protect sensitive information from disclosure either via a screen reader or display on the device display 110. FIG. 12A illustrates possible content of a schedule spanning several days, including dates, times, and a subject. As with the messages describe above, the subject lines 1210 may contain sensitive information, such as the term "personnel" or a client name. Accordingly, when the schedule is presented to the user, either by way of an audible report or by displaying the schedule in a graphical user interface, sensitive information may be redacted if the device is operating in a discrete mode. For example, when calendar events are stored at the device, a method similar to that of FIG. 8A may be carried out to flag entries as sensitive as shown by the sensitive flag field 1230 in FIG. 12B. Also similarly, an alternate subject line 1220 may be created and stored for those flagged calendar events. In this example, the subject line is simply redacted to remove the keyword that was identified in FIG. 6. Then, when the schedule is presented to the user, for each flagged event the alternate subject is used, thereby avoiding the disclosure of potentially sensitive information. An example of a graphical user interface 1250 is shown in FIG. 12C, in which the redacted subject lines are displayed in an agenda view.

As another example, the methods and systems described above may be applied to social feeds received and displayed at the device 100. Updates received from "friends" or contacts in social networks may be delivered to the communication device 100 and included in a mailbox listing, generally as described above, or may be rendered for presentation to the user in a separate inbox or feed display by a social feed application executing on the device 100. A social network update message can include a text message created by the sender, as well as other status information that can be manually or automatically inserted on transmission from the sender's device. This status information can include location-related information which is generated either at the sender's device or at a network service associated with the sender's device, and inserted in the update message either prior to transmission from the sender's device or prior to forwarding the message to the recipient's communication device 100, as appropriate. Either one of the sender's message or the status information may include sensitive information; for example, the actual physical location of the sender as reported in the status information may be confidential. Thus, the same criteria discussed above may be applied to incoming update messages received at the communication device from a social networking service. When a new update message is received and the discreet mode described above is implemented at the device 100, the update message is displayed at the device 100 in a redacted form, for example redacting all or part of the status information. If update messages are audibly announced, then again, all or part of the status information is redacted. The update message may also be flagged as sensitive in a manner similar to that described above.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright, unregistered design, or design patent protection. The rightsowner has no objection to the facsimile reproduction by any one of the patent document or patent disclosure, as it appears in the Patent and Trademark Office patent file or records, but otherwise reserves all copyrights and design rights whatsoever.

## Claims

1. A communication device, comprising:
a communications module;
at least one user interface;
a memory for storing messages; and
at least one processor configured to:
receive, by the communications module, a message having content comprising at least a header and a body, and to store said received message in the memory;
determine that the received message content contains sensitive information by comparing the received message content to predefined criteria;
in response to an instruction to provide a message listing or audible notification of messages upon receipt, said message listing or audible notification comprising at least a portion of a header of said messages, present the received message at the device via one of the at least one user interface while redacting the header for said received message; and
in response to a received command, present said received message content comprising said sensitive information via said user interface.

2. The device of claim 1, wherein said at least one user interface comprises a display, and presenting the received message via the user interface comprises displaying said received message within said message listing.

3. The device of claim 1, wherein said at least one user interface comprises an audio user interface, and presenting the received message via the user interface comprises the audible notification of said received message.

4. The device of claim 3, wherein the processor is further configured to:
associate the received message with a sensitivity flag; and
prior to said presenting said received message content, display said received message as a priority message in a message listing at one of the at least one user interface.

5. The device of any one of the preceding claims, wherein the predefined criteria comprises a keyword.

6. The device of any one of the preceding claims, wherein redacting the header comprises replacing at least a portion of the header of the received message with alternate header information.

7. The device of claim 6, wherein said portion of the header comprises at least one of a subject line and sender identity.

8. A method of presenting received messages, the method comprising:
receiving, at a device, a message having content comprising at least a header and a body;
determining that the received message content contains sensitive information by comparing the received message content to predefined criteria;
in response to an instruction to provide a message listing or audible notification of messages upon receipt, said message listing or audible notification comprising at least a portion of a header of said messages, presenting the received message at the device via a user interface while redacting the header for said received message; and
in response to a received command, presenting said received message content comprising said sensitive information via the user interface.

9. The method of claim 8, wherein the at least one user interface comprises a display, and presenting the received message via the user interface comprises displaying said received message within said message listing.

10. The method of claim 8, wherein the at least one user interface comprises an audio user interface, and presenting the received message via the user interface comprises the audible notification of said received message.

11. The method of any one of claims 8 to 10, wherein redacting the header comprises replacing at least a portion of the header of the received message with alternate header information.

12. The method of claim 11, wherein said portion of the header comprises at least one of a subject line and a sender identity.

13. The method of any one of claims 8 to 12, wherein the device comprises a message server in communication with a mobile communication device, said determining is carried out at the message server, and said presenting the received message via the user interface comprises transmitting the message listing comprising said redacted header to the mobile communication device for display.

14. The method of any one of claims 8 to 12, wherein the device comprises a wireless communication device in communication with an audio accessory, said determining is carried out at the wireless communication device, and said presenting the received message is carried out via the audio accessory.

15. The method of any one of claims 8 to 12, wherein the device comprises a wireless communication device, and said determining, said presenting the received message, and said presenting the received message content are carried out at the wireless communication device.
